# EUROPÄISCHE PATENTANMELDUNG

(11) **EP 4 216 340 A2**
(43) Veröffentlichungstag der Anmeldung: **26.07.2023**
(21) Anmeldenummer: 22214905.6
(22) Anmeldetag: 20.12.2022
(51) Int. Cl.: H01M 10/613, H01M 10/625, H01M 10/6551, H01M 10/6552, H01M 10/6556, H01M 50/213

(54) **BATTERIEMODUL MIT HEATPIPE**

(30) Priorität: 25.01.2022 DE 102022200767
(71) Anmelder: ContiTech Techno-Chemie GmbH, 61184 Karben (DE)
(72) Erfinder: Kempf, Dominik, 30165 Hannover (DE)
(74) Vertreter: Continental Corporation

(57) **Zusammenfassung**

Die Erfindung betrifft ein Batteriemodul (2) mit einer Batteriezelle (4) und
einer Heatpipe (6) mit einem Verdampfer (6a) und einem Kondensator (6b), wobei der Verdampfer (6a) mit der Batteriezelle (4) thermisch gekoppelt und von der Batteriezelle (4) elektrisch isoliert ist. Zur verbesserten thermischen Kopplung wird vorgeschlagen, dass der Verdampfer (6a) eine die Batteriezelle (4) umgreifende Aufnahme für die Batteriezelle (4) ausbildet.

## Beschreibung

Die vorliegende Erfindung betrifft ein Batteriemodul mit einer Batteriezelle und einer Heatpipe mit einem Verdampfer und einem Kondensator, wobei der Verdampfer mit der Batteriezelle thermisch gekoppelt und von der Batteriezelle elektrisch isoliert ist.

Derartige Batteriemodule werden z.B. in New Energy Vehicles eingesetzt. Üblicherweise weist ein Batteriemodul eine Vielzahl von parallel und/oder in Reihe geschalteten Batteriezellen auf, wobei in einer Batteriezelle eine Kathodenplatte und eine Anodenplatte in einem meist festem oder gelartigem Elektrolyten eingetaucht sind. Mehrere dieser Batteriemodule können parallel und/oder in Reihe geschaltet z.B. eine Traktionsbatterie in einem Elektrofahrzeug oder eine Puffer-Batterie in einem Wasserstoff-Brennstoffzellen-Fahrzeug ausbilden.

Ein Problem bei derartigen Batteriemodulen ist die mit dem Be- und Entladevorgang einhergehende Wärmeentwicklung. Wird diese Wärme nicht abgeführt, führt dies zu einem Temperaturanstieg im Batteriemodul, der sich negativ auf dessen Leistungsvermögen und Lebensdauer auswirken kann.

Um eine ausreichende Kühlung sicherzustellen werden zur Abführung der Wärme im Stand der Technik u.a. Heatpipes verwendet. Heatpipes sind meist rohrförmig oder flach ausgebildete Metallkörper mit einem hermetisch gekapselten Innenvolumen, das mit einem Arbeitsfluid gefüllt ist. In der Regel liegt das Arbeitsfluid zu einem kleinen Teil in flüssigem, zum größeren Teil im gasförmigen Zustand vor. Bei Wärmezufuhr beginnt ein Teil des flüssigen Teils des Arbeitsfluides zu verdampfen. Der Bereich der Heatpipe, welcher der Wärmeaufnahme dient, wird daher als Verdampfer bezeichnet. Das Verdampfen des Arbeitsmediums führt zu einem lokalen Druckanstieg und somit zu einem Druckgefälle innerhalb der Heatpipe, wodurch der Dampf in einen Bereich mit niedrigerer Temperatur strömt. Dort kondensiert der Dampf, wobei die zuvor aufgenommene Wärme als Kondensationswärme abgegeben wird. Dieser der Wärmeabgabe dienende Bereich der Heatpipe wird daher als Kondensator bezeichnet. Der Kondensator kann mit einer Wärmesenke, z.B. einem Kühlkörper, thermisch gekoppelt werden. Die kondensierte Flüssigkeit kann mit Hilfe einer Dochtstruktur, die eine Kapillarwirkung auf die flüssige Phase der Arbeitsflüssigkeit ausübt wie z.B. gesintertem Metallpulver, einem Sieb und/oder einem gerillten Docht, zum Verdampfer zurückgeführt werden. Heatpipes dienen somit dem passiven Wärmetransport ohne Hilfsmittel, wie etwa einer Umwälzpumpe.

Batteriemodule, bei denen Heatpipes zur Wärmeabführung verwendet werden, sind aus dem Stand der Technik bekannt. Beispielsweise ist in der JP H07 45310 A ein Batteriemodul mit einer Vielzahl von quaderförmigen Batteriezellen beschrieben, zwischen denen rohrförmige Heatpipes angeordnet sind. Sowohl Batteriezellen als auch Heatpipes sind dabei in einem Harzkörper vergossen. Die in den Zellen beim Be- oder Entladen erzeugte Wärme wird zunächst auf den massiven Harzkörper und von diesem auf die Heatpipes übertragen. Die Wärmeabführung wird daher maßgeblich von der Wärmeleitfähigkeit des Harzes beeinflusst.

Insbesondere bei Batteriemodulen für New Energy Vehicles kommt es wegen der hohen Energiedichten zu einer vermehrten Wärmeentwicklung, so dass bekannte Heatpipe-Konzepte an ihre Grenzen stoßen.

Aufgabe der vorliegenden Erfindung ist es daher, ein Batteriemodul bereitzustellen, bei dem die Wärmeabführung über die Heatpipe verbessert wird. Ferner ist es Aufgabe der vorliegenden Erfindung, ein Kraftfahrzeug bereitzustellen, dass mit einem Batteriemodul mit verbesserter Wärmeabführung ausgestattet ist. Insbesondere soll ein Batteriemodul bereitgestellt werden, das in einfacher und/oder kostengünstiger Weise hergestellt werden kann.

Diese Aufgabe wird durch ein Batteriemodul mit den Merkmalen des Anspruchs 1 gelöst. Ferner wird die Aufgabe durch ein Kraftfahrzeug gemäß Anspruch 11 gelöst. Bevorzugte Merkmale sind Gegenstand der Unteransprüche. Weitere Vorteile und Merkmale sind der allgemeinen Beschreibung sowie den Ausführungsbeispielen zu entnehmen.

Das erfindungsgemäße Batteriemodul weist zumindest eine Batteriezelle und eine Heatpipe mit einem Verdampfer und einem Kondensator auf. Der Verdampfer der Heatpipe ist mit der Batteriezelle thermisch gekoppelt und von der Batteriezelle elektrisch isoliert. Das erfindungsgemäße Batteriemodul zeichnet sich dadurch aus, dass der Verdampfer eine die Batteriezelle umgreifende Aufnahme für die Batteriezelle ausbildet.

Auf diese Weise bildet die Heatpipe eine die Batteriezelle zumindest abschnittweise umgebende Struktur aus, wodurch die von der Batteriezelle unidirektional abgegebene Wärme besser aufgenommen werden kann. Insbesondere ist die Heatpipe als flacher und um die Batteriezelle gebogen verlaufender Hohlkörper ausgeführt. Durch die Anordnung der Batteriezelle in der Aufnahme kann eine besonders gute thermische Kopplung einer Außenfläche der Batteriezelle und einer Innenfläche des Verdampfers erreicht werden. Vorzugsweise liegt eine zur Batteriezelle gewandte Innenfläche des Verdampfers vollflächig an einer Außenfläche der Batteriezelle an.

Unter einer umgreifenden Aufnahme für die Batteriezelle ist eine Struktur zu verstehen, die derart zumindest abschnittsweise um die Batteriezelle angeordnet ist, dass eine Bewegung der Batteriezelle in zumindest einer Bewegungsebene einschränkt ist. Auf diese Weise trägt die Heatpipe durch ihre Formgebung zur Festlegung bzw. Lagerung der Batteriezelle im Batteriemodul bei, wodurch die Anzahl notwendiger Befestigungsmittel reduziert werden kann.

Die Heatpipe ist von der Batteriezelle elektrisch isoliert. Beispielsweise kann die Batteriezelle hierzu ein isolierendes Gehäuse oder eine isolierende Außenschicht aufweisen. Alternativ oder zusätzlich kann zwischen der Außenfläche der Batteriezelle und der Innenfläche des Verdampfers eine separate Isolationsschicht angeordnet sein. Die Außenschicht und/oder die Isolationsschicht können dabei eine im Vergleich zur Dicke der Heatpipe geringere Dicke aufweisen. Beispielsweise können die Außenschicht und/oder die Isolationsschicht als Folie ausgebildet sein. Auf diese Weise kann die Innenfläche des Verdampfers möglichst nah an der Außenfläche der Batteriezelle angeordnet werden bzw. an dieser anliegen, so dass eine besonders gute thermische Kopplung erzielt wird.

In einer bevorzugten Ausgestaltung der Erfindung ist die Batteriezelle länglich ausgebildet und der Verdampfer umgreift eine um eine Längsmittelachse der Batteriezelle verlaufende Mantelfläche der Batteriezelle. Beispielsweise kann die Batteriezelle die Form eines länglichen Zylinders oder eines länglichen Quaders aufweisen. Bei dieser Konfiguration kann ein besonders großer Anteil der abgestrahlten Abwärme absorbiert sowie eine besonders gute thermische Kopplung der Außenfläche der Batteriezelle und der Innenfläche des Verdampfers erreicht werden.

Im Sinne der vorliegenden Erfindung ist die Batteriezelle länglich ausgebildet, wenn eine der äußeren Abmessungen (Länge, Breite, Höhe) der Batteriezelle jeweils zumindest 50 % größer ist als die anderen beiden Abmessungen. Beispielsweise ist eine zylinderförmig ausgebildete die Batteriezelle länglich, wenn ihre Höhe zumindest 50 % größer ist als ihr Durchmesser. Eine quaderförmig ausgebildete Batteriezelle ist länglich, wenn z.B. eine Kantenlänge jeweils zumindest 50 % größer ist als die anderen beiden Kantenlängen.

In einer weiteren bevorzugten Ausgestaltung der Erfindung weist der Verdampfer einen C-förmigen Querschnitt auf. Dieserart lässt sich in konstruktiv einfacher Weise ein großer Anteil der abgestrahlten Abwärme absorbieren und zudem eine gute thermische Kopplung herstellen. Auch ein Formschluss zwischen Heatpipe und Batteriezelle lässt sich so praktikabel umsetzen. Hierdurch wird die Herstellung der Heatpipe bzw. des Batteriemoduls vereinfacht, beschleunigt sowie kostengünstiger realisierbar. Bezogen auf eine zylinderförmig ausgebildete längliche Batteriezelle bedeutet C-förmig, dass - aus einer Perspektive in Längsrichtung der Batteriezelle betrachtet - die Innenfläche des Verdampfers mehr als den halben Umfang der Mantelfläche der Außenwand der Batteriezelle insbesondere formschlüssig umgibt. Bezogen auf eine quaderförmig ausgebildete längliche Batteriezelle bedeutet C-förmig, dass - aus einer Perspektive in Längsrichtung der Batteriezelle betrachtet - die Innenfläche des Verdampfers an mehr als zwei Seitenflächen der Mantefläche der Außenwand der Batteriezelle - insbesondere formschlüssig und/oder reibschlüssig - umgibt. Vorzugsweise weist der Verdampfer zur effektiven Wärmeabführung zumindest über die halbe Länge der Batteriezelle, bevorzugt über die gesamte Länge der Batteriezelle, einen insbesondere gleichbleibenden C-förmigen Querschnitt auf. Bevorzugt weist die gesamte Heatpipe einen C-förmigen Querschnitt auf, wodurch die Fertigung des Batteriemoduls erheblich vereinfacht wird.

In einer weiteren bevorzugten Ausgestaltung der Erfindung umgibt der Verdampfer die Batteriezelle spiralförmig. Auf diese Weise kann auch bei Verwendung einer länglichen Heatpipe, z.B. einer in Form eines flachen gebogenen Rohres vorliegenden Heatpipe, ein großer Teil der Außenfläche der Batteriezelle abgedeckt und so ein großer Anteil der abgestrahlten Abwärme absorbiert werden. Beispielsweise kann eine in Form eines flachen Rohres vorliegende Heatpipe in einer oder in mehreren Windungen um eine zylinder- oder quaderförmige längliche Batteriezelle gewunden sein.

In einer weiteren bevorzugten Ausgestaltung der Erfindung umgibt der Verdampfer zumindest 60 %, bevorzugt zumindest 70%, besonders bevorzugt zumindest 90 % einer Mantelfläche der Batteriezelle. Durch eine derartige konstruktive Ausgestaltung lässt sich ein noch größerer Anteil der abgestrahlten Abwärme absorbieren und zudem eine gute thermische Kopplung herstellen. Ferner kann auf diese Weise die Batteriezelle besser von der Heatpipe gehalten werden.

In einer weiteren bevorzugten Ausgestaltung der Erfindung hat die Batteriezelle ein um den Verdampfer angeordnetes Spannelement, das dazu ausgebildet ist, den Verdampfer an die Batteriezelle anzudrücken. Auf diese Weise wird die Innenfläche des Verdampfers gegen die Außenfläche Batteriezelle gepresst, was die thermische Kopplung verbessert. Durch den resultierenden Reibschluss zwischen Heatpipe und Batteriezelle trägt die Heatpipe zudem zur Fixierung bzw. Lagerung der Batteriezelle im Batteriemodul bei, wodurch die Anzahl notwendiger Befestigungsmittel noch weiter reduziert werden kann. Das Spannelement kann beispielsweise ein federelastisches Element sein. Als federelastisches Element kann ein Ring aus einem elastischen Material, z.B. Gummi, oder eine insbesondere metallische Schraubenfeder verwendet werden. Ferner kann das Spannelement auch eine Schelle oder eine Klemme sein, die über den Verdampfer gestülpt und anschließend gespannt bzw. zugezogen wird.

In einer weiteren bevorzugten Ausgestaltung der Erfindung ist der Verdampfer zur Ausübung eines Anpressdrucks auf die Batteriezelle federelastisch vorgespannt. In anderen Worten wird die Batteriezelle von der Heatpipe eingeklemmt. Dadurch wird die Innenfläche des Verdampfers gegen die Außenfläche Batteriezelle gepresst, was die thermische Kopplung verbessert. Ferner trägt die Heatpipe durch den resultierenden Reibschluss zwischen Heatpipe und Batteriezelle zur Fixierung bzw. Lagerung der Batteriezelle im Batteriemodul bei, wodurch die Anzahl notwendiger Befestigungsmittel noch weiter reduziert werden kann. Durch die Verwendung der federelastisch vorgespannten Heatpipe zur Erzeugung des Anpressdrucks kann auf separate Mittel zur Erzeugung des Anpressdrucks, wie z.B. ein oder mehreren Spannelementen, teilweise oder sogar vollständig verzichtet werden, wodurch ein besonders einfacher und kompakter Aufbau möglich ist.

In einer weiteren bevorzugten Ausgestaltung der Erfindung weist das Batteriemodul einen mit dem Kondensator thermisch gekoppelten Kühlkanal zum Transport eines Kühlfluids auf. Die von der Batteriezelle erzeugte Wärme kann auf diese Weise von der Heatpipe auf das Kühlfluid übertragen werden. Das Kühlfluid kann ein zirkulierendes Kühlfluid eines Kühlkreislaufs sein. Auf diese Weise kann eine prozesssichere und effektive Wärmeabführung gewährleistet werden. Da der Kühlkanal selbst nicht um die Batteriezelle verläuft, kann das Risiko verringert werden, dass das Kühlfluid im Fall einer Leckage mit der Batteriezelle in Kontakt kommt.

In einer weiteren bevorzugten Ausgestaltung der Erfindung ist die Heatpipe, vorzugsweise der Kondensator, zur verbesserten thermischen Kopplung mit einer Wandung des Kühlkanals materialschlüssig, vorzugsweise mittels einer Löt- oder Schweißverbindung, verbunden.

In einer weiteren bevorzugten Ausgestaltung der Erfindung ragt der Kondensator in den Kühlkanal hinein. Auf diese Weise kann eine Außenfläche des Kondensators unmittelbar von dem Kühlfluid umströmt werden, was zu einer verbesserten Wärmeabführung führt. Vorzugsweise entspricht die Länge des in den Kühlkanal ragenden Teils des Kondensators 1/8 bis 1/2 der parallel zur Längsrichtung der Batteriezelle gemessenen Kanalbreite des Kühlkanals. Insbesondere ist der Kondensator vollständig im Kühlkanal angeordnet.

Gemäß dem bereits vor- sowie dem weiter unten nachbeschriebenen wird die eingangs gestellte Aufgabe auch durch ein Kraftfahrzeug nach Anspruch 11 gelöst. Sämtliche vor- sowie nachbeschriebenen Vorteile des Batteriemoduls können entsprechend auch in dem Kraftfahrzeug realisiert werden.

Insgesamt wird mit der vorliegenden Erfindung ein Batteriemodul mit einer äußerst effizienten und einfach herzustellenden Wärmeabführung bereitgestellt. In einigen Ausführungsformen der vorliegenden Erfindung ist es möglich, ein Batteriemodul bereitzustellen, bei dem jeder Batteriezelle zur effizienten Wärmeabführung eine einzige Heatpipe zugeordnet wird.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform der Erfindung in einer Draufsicht;
- Fig. 2: eine weitere Ausführungsform der Erfindung in einer Seitenansicht und
- Fig. 3: eine weitere Ausführungsform der Erfindung in einer Seitenansicht.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

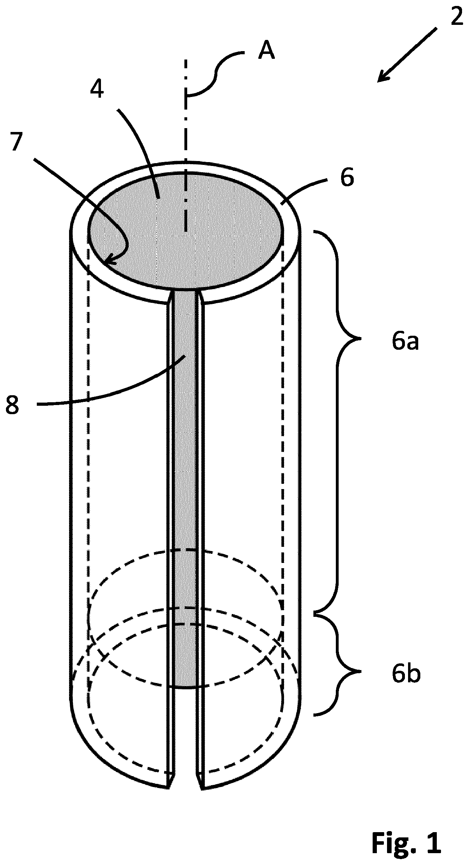

Figuren 1 bis 3 zeigen verschiedene Ausführungsformen erfindungsgemäßer Batteriemodule 2 mit je einer länglichen zylindrischen Batteriezelle 4 und einer Heatpipe 6. Die Heatpipe 6 weist einen Verdampfer 6a auf, der auch als Wärmeaufnahmebereich bezeichnet werden kann. Zudem weist die Heatpipe 6 einen Kondensator 6b auf, der auch als Wärmeabgabebereich bezeichnet werden kann. Der Verdampfer 6a ist mit der Batteriezelle 4 thermisch gekoppelt, jedoch von der Batteriezelle 4 elektrisch isoliert. Der Verdampfer 6a bildet hierbei eine die Batteriezelle 4 umgreifende Aufnahme für die Batteriezelle 4 aus. Der Verdampfer 6a ist formschlüssig um die Batteriezelle 4 angeordnet und umgreift eine um eine Längsmittelachse Ader Batteriezelle 4 verlaufende Mantelfläche 8 der Batteriezelle 4. Hierbei weisen der Verdampfer 6a bzw. die gesamte Heatpipe 6 einen C-förmigen Querschnitt auf. Beispielsweise kann die Heatpipe 6 hierzu als flacher und um die Batteriezelle 4 gebogen verlaufender Hohlkörper ausgeführt sein. Eine zur Batteriezelle 4 gewandte Innenfläche 7 des Verdampfers 6a liegt dabei vollflächig an der Mantelfläche 8 der Batteriezelle 4 an.

Auf diese Weise wird die von der Batteriezelle 4 überwiegend über die Mantelfläche 8 unidirektional abgegebene Wärme optimal von der Heatpipe 6 aufgenommen. Überdies wird eine Bewegung der Batteriezelle 4 in einer quer zur Längsmittelachse A liegenden Bewegungsebene verhindert. Die konstruktive Ausgestaltung des Batteriemoduls 2 ermöglicht eine verbesserte Wärmeabführung und trägt gleichzeitig zumindest zum Teil auch zur Festlegung bzw. Lagerung der Batteriezelle 4 im Batteriemodul 2 bei.

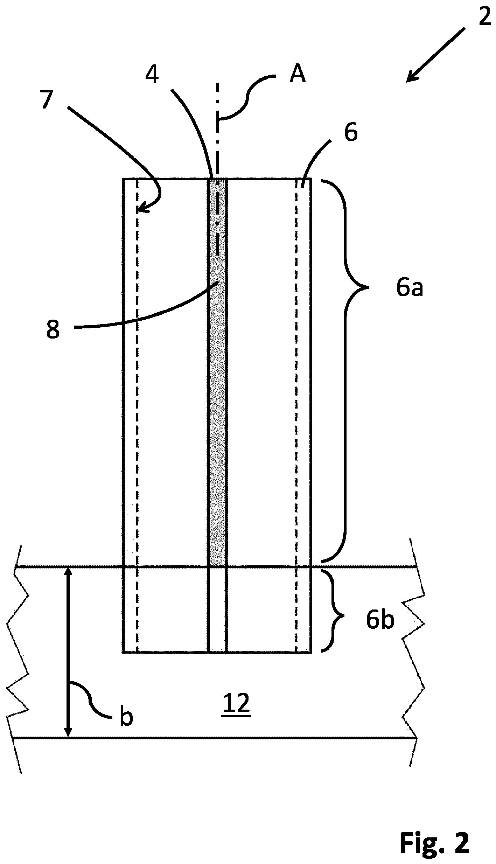

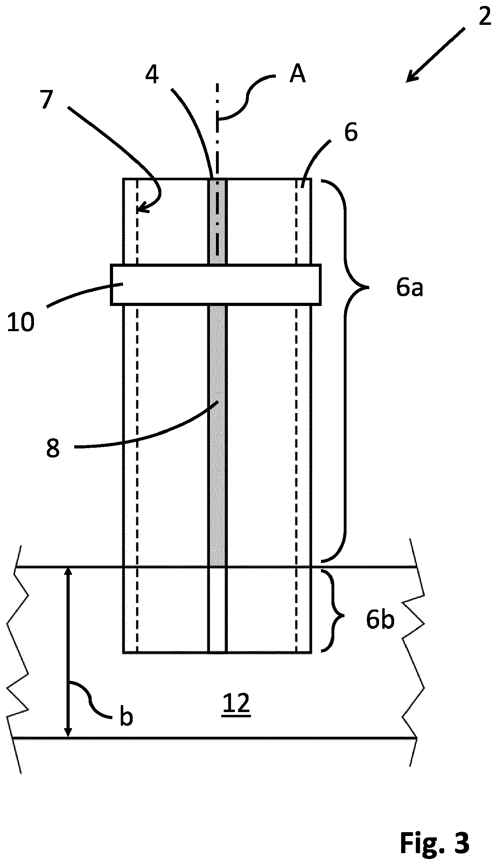

Fig. 2 und 3 zeigen Ausführungsformen eines erfindungsgemäßen Batteriemoduls 2, bei dem das Batteriemodul 2 einen mit dem Kondensator 6b thermisch gekoppelten Kühlkanal 12 zum Transport eines Kühlfluids aufweist. Der Kühlkanal 12 kann Teil eines Kühlkreislaufs sein, bei dem das Kühlfluid z.B. mit einer Umwälzpumpe durch den Kühlkanal 12 gepumpt wird, um Wärme effizient von der Heatpipe 4 abzutransportieren. Da der Kühlkanal 12 hierbei nicht selbst um die Batteriezelle 4 verläuft, kann das Risiko verringert werden, dass die Batteriezelle 4 im Fall einer Leckage beschädigt wird. Zur verbesserten thermischen Kopplung ist die Heatpipe 6 mit einer Wandung des Kühlkanals 12 materialschlüssig, vorzugsweise mittels einer Löt- oder Schweißverbindung, verbunden. Der Kondensator 6b ragt in den Kühlkanal 12 hinein, wobei die Länge des in den Kühlkanal 12 ragenden Teils des Kondensators 6b etwa 1/2 der parallel zur Längsmittelachse A der Batteriezelle 4 gemessenen Kanalbreite b des Kühlkanals 12 entspricht. Der Kondensator 6b ist dabei vollständig im Kühlkanal 12 angeordnet.

Fig. 3 unterscheidet sich von der Fig. 2 dadurch, dass das Batteriemodul 2 ein um den Verdampfer 6a angeordnetes Spannelement 10 aufweist, das dazu ausgebildet ist, den Verdampfer 6a an die Batteriezelle 4 anzudrücken. Auf diese Weise wird die Innenfläche 7 des Verdampfers 6a in radialer Richtung gegen die Mantelfläche 8 Batteriezelle gepresst, was die thermische Kopplung verbessert. Durch den resultierenden Reibschluss zwischen Heatpipe 6 und Batteriezelle 4 wird eine Bewegung der Batteriezelle 6 entlang der Längsmittelachse A gehemmt, wodurch eine bessere Fixierung der Batteriezelle 4 im Batteriemodul 2 erreicht wird. Das Spannelement 10 kann beispielsweise ein federelastisches Element sein. Als federelastisches Element kann ein Ring aus einem elastischen Material, z.B. Gummi, oder eine insbesondere metallische Schraubenfeder verwendet werden. Ferner kann das Spannelement 10 auch eine Schelle oder eine Klemme sein, die über den Verdampfer 6a gestülpt und anschließend gespannt bzw. zugezogen wird.

Alternativ oder zusätzlich kann zur Erreichung eines entsprechend vorteilhaften Reibschlusses der Verdampfer 6a zur Ausübung eines Anpressdrucks auf die Batteriezelle 4 federelastisch vorgespannt sein. Dies kann beispielsweise dadurch erreicht werden, dass der von der Innenfläche 7 des Verdampfers 6a eingeschlossene Querschnitt in einem nicht zusammengebauten Zustand des Batteriemoduls 2 geringfügig kleiner ausfällt als der Querschnitt der Batteriezelle 4. Auf diese Weise sind Batteriezelle 4 und Heatpipe 6 in einem zusammengebauten Zustand nach Art einer Presspassung miteinander verbunden. Es hat sich herausgestellt, dass es für die federelastische Vorspannung besonders vorteilhaft ist, wenn der Verdampfer 6a und/oder die gesamte Heatpipe 6 einen C-förmigen Querschnitt aufweisen.

Im Sinne der vorliegenden Anmeldung sind die Wörter "ein" bzw. "eine" nicht als Zahlwörter, sondern als unbestimmte Artikel auszulegen. Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Sofern ein Merkmal auf eine bestimmte Anzahl gerichtet ist, ist dies durch eine entsprechende Formulierung, wie z.B. "genau ein" bzw. "ein einziges", gekennzeichnet.

**Bezugszeichenliste (Teil der Beschreibung)**

| | |
|---|---|
| Batteriemodul | 2 |
| Batteriezelle | 4 |
| Heatpipe | 6 |
| Verdampfer | 6a |
| Kondensator | 6b |
| Innenfläche des Verdampfers | 7 |
| Mantelfläche der Batteriezelle | 8 |
| Spannelement | 10 |
| Kühlkanal | 12 |
| Längsmittelachse der Batteriezelle | A |
| Kanalbreite des Kühlkanals | b |

## Patentansprüche

1. Batteriemodul (2) mit
einer Batteriezelle (4) und
einer Heatpipe (6) mit einem Verdampfer (6a) und einem Kondensator (6b), wobei der Verdampfer (6a) mit der Batteriezelle (4) thermisch gekoppelt und von der Batteriezelle (4) elektrisch isoliert ist,
**dadurch gekennzeichnet, dass**
der Verdampfer (6a) eine die Batteriezelle (4) umgreifende Aufnahme für die Batteriezelle (4) ausbildet.

2. Batteriemodul (2) nach Anspruch 1, wobei die Batteriezelle (4) länglich, vorzugsweise zylinder- oder quaderförmig, ausgebildet ist und der Verdampfer (6a) eine um eine Längsmittelachse (A) der Batteriezelle (4) verlaufende Mantelfläche (8) der Batteriezelle (4) umgreift.

3. Batteriemodul (2) nach Anspruch 1 oder 2, wobei der Verdampfer (6a) einen C-förmigen Querschnitt aufweist.

4. Batteriemodul (2) nach Anspruch 1 oder 2, wobei der Verdampfer (6a) die Batteriezelle (4) spiralförmig umgibt.

5. Batteriemodul (2) nach einem der Ansprüche 2 bis 4, wobei der Verdampfer (6a) zumindest 60 %, bevorzugt zumindest 70%, besonders bevorzugt zumindest 90 % der Mantelfläche (8) der Batteriezelle (4) umgibt.

6. Batteriemodul (2) nach einem der vorangehenden Ansprüche mit einem um den Verdampfer (6a) angeordneten Spannelement (10), das dazu ausgebildet ist, den Verdampfer (6a) an die Batteriezelle (4) anzudrücken.

7. Batteriemodul (2) nach einem der vorangehenden Ansprüche, wobei der Verdampfer (6a) zur Ausübung eines Anpressdrucks auf die Batteriezelle (4) federelastisch vorgespannt ist.

8. Batteriemodul (2) nach einem der vorangehenden Ansprüche mit einem mit dem Kondensator (6b) thermisch gekoppelten Kühlkanal (12) zum Transport eines Kühlfluids.

9. Batteriemodul (2) nach Anspruch 8, wobei die Heatpipe (6), vorzugsweise der Kondensator (6b), mit einer Wandung des Kühlkanals (12) materialschlüssig, vorzugsweise mittels einer Löt- oder Schweißverbindung, verbunden ist.

10. Batteriemodul (2) nach Anspruch 8 oder 9, wobei der Kondensator (6b) in den Kühlkanal (12) hineinragt.

11. Kraftfahrzeug mit einer Batterie, **dadurch gekennzeichnet, dass** die Batterie ein Batteriemodul (2) nach einem der vorangehenden Ansprüche aufweist.
